Europäisches Patentamt

European Patent Office

Office européen des brevets

(19)

(11) Numéro de publication: **0 124 931**
**B1**

(12) # FASCICULE DE BREVET EUROPEEN

(45) Date de publication du fascicule du brevet:
**15.07.87**

(51) Int. Cl.⁴: **B 32 B 27/08,** B 32 B 27/30

(21) Numéro de dépôt: **84200543.1**

(22) Date de dépôt: **17.04.84**

(54) **Structures thermoplastiques à couches multiples comprenant une couche en polymère du fluorure de vinyle ou de vinylidène liée à une couche en polymère d'alphaoléfine.**

(30) Priorité: **27.04.83 FR 8307087**

(43) Date de publication de la demande:
**14.11.84 Bulletin 84/46**

(45) Mention de la délivrance du brevet:
**15.07.87 Bulletin 87/29**

(84) Etats contractants désignés:
**AT BE CH DE FR GB IT LI NL SE**

(56) Documents cités:
**FR - A - 1 484 153**
**FR - A - 2 181 968**
**GB - A - 1 309 011**
**US - A - 3 519 531**

(73) Titulaire: **SOLVAY & Cie (Société Anonyme), Rue du Prince Albert, 33, B-1050 Bruxelles (BE)**

(72) Inventeur: **Dehennau, Claude, Chemin des postes, 236, B-1410 Waterloo (BE)**

ACTORUM AG

## Description

La présente invention concerne des structures thermoplastiques à couches multiples comprenant une couche en polymère du fluorure de vinyle ou de vinylidène liée à une couche en polymère d'alpha-oléfine et plus particulièrement de telles structures à couches multiples dans lesquelles le polymère du fluorure de vinyle ou de vinylidène est lié au polymère d'alpha-oléfine à l'intervention d'adhésifs polymériques.

Les polymères du fluorure de vinyle et les polymères du fluorure de vinylidène sont des polymères thermoplastiques qui présentent un ensemble de propriétés intéressantes et, notamment, une inertie chimique élevée, une excellente résistance aux intempéries et aux rayons ultraviolets et une bonne imperméabilité aux gaz et aux vapeurs. De ce fait, ils trouvent des applications multiples dans des domaines très divers et, notamment, dans la protection contre la corrosion. Néanmoins, ils présentent l'inconvénient d'être relativement coûteux, ce qui risque de limiter leurs débouchés. Un moyen approprié pour réduire le coût des objets façonnés en polymères du fluorure de vinyle ou du fluorure de vinylidène consiste à utiliser ces polymères sous la forme de structures themroplastiques à couches multiples (films, feuilles, plaques, tubes, etc.) dans lesquels ils sont associés à des polymères thermoplastiques de masse, lesquels apportent, par ailleurs, leurs propriétés et avantages propres, tels que par exemple la résistance mécanique. Toutefois, les polymères fluorés précités adhèrent très mal aux autres polymères thermoplastiques et notamment aux polymères d'alpha-oléfines, de sorte qu'il est généralement nécessaire de recourir à des adhésifs, le plus souvent polymériques, pour assurer un lien adhérent entre ces polymères fluorés et d'autres polymères thermoplastiques.

Dans le brevet français FR-A-1 484 153 (THE DOW CHEMICAL CO), on préconise de lier une couche en polyoléfine à une couche en polymère d'hydrocarbure fluoré à l'intervention d'un adhésif polymérique constitué, de préférence, d'un copolymère d'éthylène et d'acétate de vinyle contenant d'environ 13 à 35% en poids d'acétate de vinyle.

On a maintenant constaté que les structures à couches multiples de l'art antérieur dans lesquelles on lie une polyoléifne à un polymère d'hydrocarbure fluoré, tel que le fluorure de vinyle ou le fluorure de vinylidène à l'intervention d'un copolymère d'éthylène et d'acétate de vinyle contenant de 13 à 35% en poids d'acétate de vinyle sont sensibles au délaminage au niveau de la couche en polymère fluoré.

La présente invention vise à procurer des structures thermoplastiques à couches multiples comprenant une couche en polymère du fluorure de vinyle ou de vinylidène liée à une couche en polymère d'alpha-oléfine qui ne présentent pas l'inconvénient précité.

A cet effet, l'invention procure des structures thermoplastiques à couches multiples comprenant une couche en polymère du fluorure de vinyle ou de vinylidène liée à une couche en polymère d'alpha-oléfine à l'intervention conjointe d'un polymère d'acétate de vinyle et d'un copolymère d'éthylène et d'acétate de vinyle.

Par structures à couches multiples comprenant une couche en polymère du fluorure de vinyle ou de vinylidène liée à une couche en polymère d'alpha-oléfine, on entend désigner les structures multicouches contenant au moins une couche en polymère du fluorure de vinyle ou du fluorure de vinylidène liée à au moins une couche en polymère d'alpha-oléfine. Les structures thermoplastiques à couches multiples selon l'invention peuvent donc contenir une ou plusieurs couches en polymère du fluorure de vinyle ou de vinylidène liées à une ou plusieurs couches en polymère d'alpha-oléfine, ces couches pouvant elles-mêmes être liées à des couches d'autres polymères.

On a constaté que, contrairement aux copolymères d'éhylène et d'acétate de vinyle préconisés dans l'art antérieur pour lier un polymère d'hydrocarbure fluoré à une polyoléfine, les polymères d'acétate de vinyle adhèrent parfaitement aux polymères du fluorure de vinyle et du fluorure de vinylidène. En outre, lesdits polymères d'acétate de vinyle sont compatibles et adhèrent parfaitement aux copolymères d'éthylène et d'acétate de vinyle.

L'invention réside donc essentiellement dans le recours conjoint à un polymère d'acétate de vinyle et à un copolymère d'éthylène et d'acétate de vinyle pour lier et faire adhérer une couche en polymère du fluorure de vinyle ou de vinylidène à une couche en polymère d'alpha-oléfine dans la réalisation de structures multicouches.

Par polymère d'acétate de vinyle, on entend désigner aussi bien l'homopolymère que les copolymères binaires d'acétate de vinyle et d'éthylène contenant au moins 50% en poids d'acétate de vinyle. Les meilleurs résultats sont obtenus avec les copolymères binaires d'acétate de vinyle et d'éthylène contenant de 60 à 90% en poids d'acétate de vinyle et, plus particulièrement encore, avec ceux contenant de 70 à 85% en poids d'acétate de vinyle auxquels on donne, par conséquent, la préférence.

Par copolymère d'éthylène et d'acétate de vinyle, on entend désigner les copolymères binaires d'éthylène et d'acétate de vinyle contenant de 60 à 95% en poids d'éthylène. Les meilleurs résultats sont obtenus avec ceux contenant de 75 à 90% en poids d'éthylène auxquels on donne, par conséquent, la préférence.

Des structures thermoplastiques à couches multiples préférées sont celles dans lesquelles une couche en polymère du fluorure de vinyle ou de vinylidène est liée à une couche en polymère d'alpha-oléfine à l'intervention conjointe d'un copolymère binaire d'acétate de vinyle et d'éthylène contenant de 60 à 90% en poids d'acétate de vinyle et d'un copolymère binaire d'éthylène et d'acétate de vinyle contenant de 60 à 95% en poids d'éthylène.

Par polymère du fluorure de vinyle ou de vinylidène, on entend désigner de préférence tous les polymères contenant au moins 85% molaires, et, de préférence, au moins 90% molaires d'unités monomériques dérivées respectivement du fluorure de vinyle ou du fluorure de vinylidène. Les polymères du fluorure de vinyle ou de vinylidène qui conviennent à la réalisation des structures multicouches selon l'invention comprennent donc aussi bien les homopolymères du fluorure de vinyle et du fluorure de vinylidène, que les copolymères du fluorure de vinyle ou de vinylidène contenant des unités monomériques dérivées d'un ou de plusieurs comonomères. On donne la préférence aux polymères contenant au moins 90% molaires d'unités monomériques dérivées respectivement du fluorure de vinyle ou du fluorure de vinylidène, le complément éventuel étant constitué de préférence d'unités monomériques dérivées d'autres oléfines fluorées, tels que le fluorure de vinylidène, le fluorure de vinyle, le trifluoréthylène, le chlorotrifluoréthylène, le tétrafluoréthylène et l'hexafluorpropylène. Des polymères fluorés particulièrement préférés sont l'homopolymère du fluorure de vinyle et l'homopolymère du fluorure de vinylidène et, plus particulièrement encore l'homopolymère du fluorure de vinylidène.

Par polymère d'alpha-oléfine, on entend désigner les polymères contenant au moins 50% molaires et, de préférence, au moins 75% molaires d'oléfines à insaturation terminale dont la molécule contient de 2 à 18 atomes de carbone et, de préférence, de 2 à 8 atomes de carbone, telles que l'éthylène, le propylène, le butène-1, le pentène-1, les méthylbutènes-1, l'hexène-1, les 3- et 4-méthylpentènes-1, le vinylcyclohexène et le styrène. On donne la préférence aux homopolymères de pareilles alpha-oléfines et aux copolymères de ces alpha-oléfines entre elles ou avec des dioléfines comprenant de 4 à 18 atomes de carbone, telles que des dioléfines aliphatiques nonconjuguées comme l'hexadiène-1,4 par exemple ou telles que des dioléfines alicycliques ayant un pont endocyclique comme le dicyclopentadiène par exemple. Des polymères d'alpha-oléfines particulièrement préférés sont le polyéthylène (haute ou basse densité), le polypropylène et le polystyrène. Un polymère d'alpha-oléfine tout particulièrement préféré est le polyéthylène.

Le mode d'obtention des structures multicouches selon l'invention n'est pas critique. On peut donc faire appel à toutes les techniques usuelles d'assemblage de couches de polymères thermoplastiques pour réaliser les structures à couches multiples selon l'invention, telles que, par exemple, le collage à froid à l'intervention d'une solution dans un solvant approprié des adhésifs polymériques. Néanmoins, on donne la préférence aux techniques d'assemblage à chaud dans lesquelles les polymères constitutifs sont mis en œuvre à une température au moins égale à leur température de ramollissement, telles que le doublage, la coextrusion ou la coextrusion-doublage qui constituent, par ailleurs, des techniques de transformation des matières plastiques bien connues en elles-mêmes.

Le mode de mise en œuvre des adhésifs polymériques sera bien entendu adapté au mode de réalisation choisi pour associer les couches polymériques constitutives des structures à couches multiples. Selon les cas, le polymère d'acétate de vinyle et le copolymère d'éthylène et d'acétate de vinyle sont mis en œuvre séparément et constituent deux couches adhésives distinctes ou en mélange auquel cas ils constituent une couche adhésive unique.

Les structures à couches multiples résultant d'un assemblage par doublage (pressage à chaud de couches polymériques préformées, par exemple, par extrusion) comprennent deux couches adhésives distinctes, à savoir une couche en polymère d'acétate de vinyle faisant face à la couche en polymère du fluorure de vinyle ou de vinylidène et une couche distincte en polymère d'éthylène et d'acétate de vinyle faisant face à la couche en polymère d'alpha-oléfine. Les structures thermoplastiques à couches multiples selon l'invention qui résultent d'un assemblage par doublage comprennent donc au moins quatre couches polymériques distinctes constituées essentiellement, dans l'ordre, d'une couche en polymère du fluorure de vinyle ou de vinylidène, d'une couche en polymère d'acétate de vinyle, d'une couche en copolymère d'éthylène et d'acétate de vinyle et d'une couche en polymère d'alpha-oléfine.

Les structures à couches multiples résultant d'un assemblage par coextrusion ou par coextrusion-doublage comprennent une couche adhésive unique constituée d'un mélange de polymère d'acétate de vinyle et de copolymère d'éthylène et d'acétate de vinyle. Avantageusement, ce mélange contient de 25 à 75% en poids de polymère d'acétate de vinyle et, de préférence, environ 50% en poids de polymère d'acétate de vinyle.

Les structures thermoplastiques à couches multiples selon l'invention qui résultent d'un assemblage par coextrusion ou par coextrusion-doublage comprennent donc au moins trois couches polymériques constituées essentiellement, dans l'ordre, d'une couche en polymère du fluorure de vinyle ou de vinylidène, d'une couche en un mélange de polymère d'acétate de vinyle et de copolymère d'éthylène et d'acétate de vinyle et d'une couche en polymère d'alpha-oléfine.

Dans le cas où les structures à couches multiples sont réalisées par coextrusion ou par coextrusion-doublage, il est particulièrement avantageux de mettre en œuvre un mélange de polymère d'acétate de vinyle et de copolymère d'éthylène et d'acétate de vinyle présentant des viscosités dynamiques différentes. En pratique, et de manière connue en soi, la viscosité dynamique des deux polymères adhésifs mis en œuvre sous la forme d'un mélange sera adaptée à la géométrie de l'outillage de coextrusion ou de coextrusion-doublage et à l'épaisseur relative des différentes couches polymériques, de manière telle qu'une part prépondérante du polymère d'acétate de vinyle soit située face à la couche en polymère fluoré et qu'une part prépondérante du copolymère d'éthylène et d'acétate de vinyle soit située face à la couche en polymère d'alpha-oléfine. Les viscosités dynamiques optimales du polymère d'acétate de vinyle et du copolymère d'éthylène et d'acétate de vinyle seront donc avantageusement évaluées dans chaque cas par voie expérimentale sur l'appareillage de coextrusion ou de coextrusion-doublage choisi.

Il est entendu que les structures à couches multiples selon l'invention peuvent comprendre des couches polymériques supplémentaires telles que par exemple des couches constituées de déchets polymériques provenant du recyclage ou encore des couches en polymères thermoplastiques autres que les polymères du fluorure de vinyle ou du fluorure de vinylidène et d'alpha-oléfines. Néanmoins, des structures thermoplastiques à couches multiples auxquelles on donne la préférence sont celles résultant d'un assemblage par doublage et qui comprennent quatre couches polymériques, et celles résultant d'un assemblage par coextrusion ou par coextrusion-doublage et qui comprennent trois couches polymériques. Des structures thermoplastiques à couches multiples qui sont particulièrement préférées sont celles résultant d'un assemblage par coextrusion.

Il est également entendu que chacun des polymères constitutifs des structures à couches multiples selon l'invention peut comprendre les additifs usuels utilisés à la mise en œuvre de ce polymère, tels que, par exemple, des lubrifiants, des plastifiants, des stabilisants thermiques, des stabilisants à la lumière, des charges, des pigments etc. Il est particulièrement avantageux d'incorporer au polymère du fluorure de vinyle ou de vinylidène ou encore aux polymères adhésifs un agent stabilisant aux rayons ultraviolets en vue de protéger le polymère d'alpha-oléfine. De même, il peut être avantageux d'incorporer une faible quantité, par exemple jusqu'à 10% en poids environ, de polymère adhésif approprié aux polymères constitutifs des structures à couches multiples.

L'épaisseur des couches polymériques constitutives des structures à couches multiples selon l'invention et l'épaisseur totale desdites structures n'est pas critique et dépend bien entendu de l'usage auquel on les destine. Les structures thermoplastiques à couches multiples selon l'invention peuvent donc se présenter sous la forme de films, de feuilles, de plaques, de tubes etc.

Les structures thermoplastiques à couches multiples selon l'invention peuvent être utilisées avantageusement, sous la forme de films, de feuilles, de plaques ou de tubes etc., dans des domaines d'application exigeant une inertie chimique élevée, tels que dans les industries chimiques, pharmaceutiques et alimentaires ou encore une résistance élevée aux rayons ultraviolets, tels que par exemple dans la fabrication de films agricoles.

Les exemples qui suivent illustrent l'invention sans toutefois la limiter. Les exemples 1 et 2, selon l'invention, concernent des structures thermoplastiques coextrudées à trois couches comprenant, dans l'ordre, une couche en homopolymère du fluorure de vinylidène (polyfluorure de vinylidène de vinylidène de marque enregistrée SOLEF et de type 1008 produit et commercialisé par SOLVAY & CIE), une couche en un melange 1:1 de polymère d'acétate de vinyle et de copolymère d'éhylène et d'acétate de vinyle et une couche en homopolymère d'éthylène (polyéthylène à haute densité de marque enregistrée ELTEX et de type B5920 produit et commercialisé par SOLVAY & Cie).

L'exemple 3, de référence, concerne une structure thermoplastique à trois couches comprenant, dans l'ordre, une couche en polyfluorure de vinylidène de marque enregistrée SOLEF et de type 1008, une couche en copolymère d'éthylène et d'acétate de vinyle et une couche en polyéthylène à haute densité de marque enregistrée ELTEX et de type B5920.

Pour fabriquer les structures thermoplastiques coextrudées à trois couches des exemples 1 à 3, on dispose de trois extrudeuses alimentant une tête de coextrusion particulière.

Les trois extrudeuses, repérées respectivement par les indices A, B et C sont:
– sur l'extrudeuse A, de marque enregistrée TROESTER et de type monovis EP30 de longueur de vis 20 fois le diamètre et de taux de compression 2, on extrude un polyéthylène à haute densité (PEHD) de marque enregistrée ELTEX et de type B5920. Les températures de chauffe affichées sont depuis la zone d'alimentation à la zone de pompage respectivement de 195 °C–210 °C–215 °C–220 °C;
– sur l'extrudeuse B, de marque enregistrée BRABENDER et de type monovis Laborextruder 20D de longueur de vis 20 fois le diamètre et de taux de compression 4; on extrude les adhésifs polymériques précités. Les températures de chauffe affichées dans la zone d'alimentation et de pompage sont respectivement de 90 à 140 °C;
– sur l'extrudeuse C, de type monovis Thoret 20 mm de longueur de vis 15 fois le diamètre et de taux de compression 3,5, on extrude le polyfluorure de vinylidène (PVDF) de marque enregistrée SOLEF et de type 1008. Les températures de chauffe affichées sont dans ce cas de 200 et 210 °C.

La tête de coextrusion particulière comprend un répartiteur de flux et une filière de coextrusion à deux canaux d'entrée (a et b) et à un canal de sortie (c). On maintient la température de cette tête de coextrusion à 215 °C.

Les extrudeuses B et C alimentent le répartiteur de flux raccordé au canal d'entrée a de la filière de coextrusion. L'extrudeuse A alimente le canal b de la filière de coextrusion. Les canaux a et b rebouchent dans le canal c de 0,75 mm d'épaisseur et de 21 mm de longueur où se forment les structures thermoplastiques coextrudées à trois couches selon les exemples 1, 2 et 3.

Les débits des trois extrudeuses sont réglés de façon à ce que l'épaisseur des couches sont d'environ 0,25 mm pour le PEHD, de environ 0,15 mm pour les adhésifs polymériques et de environ 0,1 mm pour le PVDF.

Le test d'adhérence est effectué sur un dynamomètre FRANK type 650 suivant une méthode proche de la norme ASTM D 1876–72.

Dans le Tableau I ci-dessous sont consignés la nature et la viscosité des adhésifs polymériques ainsi que les résultats de l'évaluation de l'adhérence.

Tableau I

| | Adhésifs polymériques | | | | |
| | Copolymère binaire d'éthylène et d'acétate de vinyle | | Polymère d'acétate de vinyle | | |
| N° de l'exemple | Teneur en éthylène, % en pds | Viscosité dynamique Pa · sec | Teneur en acétate, % en pds | Viscosité dynamique˙ Pa · sec | Adhérence, Newton/cm |
|---|---|---|---|---|---|
| 1 | 80 | $9,5.10^2$ | 100 | $2,0.10^3$ | 1,1 |
| 2 | 80 | $6,0.10^3$ | 75 | $3,4.10^3$ | 2,19 |
| 3 | 80 | $9,5.10^2$ | néant | | 0 |

˙ la viscosité dynamique est évaluée à 150 °C avec un gradient de vitesse de 10 sec$^{-1}$.

## Revendications

1. Structures thermoplastiques à couches multiples comprenant une ou plusieurs couches en polymère du fluorure de vinyle ou de vinylidène, chacune respectivement liée à une couche en polymère d'alpha-oléfine, caractérisées en ce que la couche en polymère du fluorure de vinyle ou de vinylidène est liée à la couche en polymère d'alpha-oléfine à l'intervention conjointe d'un polymère d'acétate de vinyle choisi parmi l'homopolymère et les copolymères binaires d'acétate de vinyle et d'éthylène contenant au moins 50% en poids d'acétate de vinyle et d'un copolymère binaire d'éthylène et d'acétate de vinyle contenant de 60 à 95% en poids d'éthylène.

2. Structures thermoplastiques à couches multiples suivant la revendication 1, caractérisées en ce que le polymère d'acétate de vinyle est un copolymère binaire d'acétate de vinyle et d'éthylène contenant de 60 à 90% en poids d'acétate de vinyle.

3. Structures thermoplastiques à couches multiples suivant l'une quelconque des revenidations 1 et 2, caractérisées en ce que le polymère du fluorure de vinyle ou de vinylidène est un homopolymère du fluorure de vinylidène.

4. Structures thermoplastiques à couches multiples suivant l'une quelconque des revendications 1 et 2, caractérisées en ce que le polymère du fluorure de vinyle ou de vinylidène est un homopolymère du fluorure de vinyle.

5. Structures thermoplastiques à couches multiples suivant l'une quelconque des revendications 1 et 2, caractérisées en ce que le polymère d'alpha-oléfine est choisi parmi le polyéthylène, le polypropylène et le polystyrène.

6. Structures thermoplastiques à couches multiples suivant la revendication 5, caractérisées en ce que le polymère d'alpha-oléfine èst du polyéthylène.

7. Structures thermoplastiques à couches multiples suivant l'une quelconque des revendications 1 à 6, caractérisées en ce que le polymère d'acétate de vinyle et le copolymère d'éthylène et d'acétate de vinyle constituent deux couches distinctes.

8. Structures thermoplastiques à couches multiples suivant l'une quelconque des revendications 1 à 7, caractérisées en ce qu'elles résultent d'un assemblage par doublage et en ce qu'elles contiennent quatre couches constituées dans l'ordre de polymère du fluorure de vinyle ou de vinylidène, de polymère d'acétate de vinyle, de copolymère d'éthylène et d'acétate de vinyle et de polymère d'alpha-oléfine.

9. Structures thermoplastiques à couches multiples suivant l'une quelconque des revendications 1 à 6, caractérisées en ce que le polymère d'acétate de vinyle et le copolymère d'éthylène et d'acétate de vinyle constituent une couche unique.

10. Structures thermoplastiques à couches multiples suivant l'une quelconque des revendications 1 à 6 et 9, caractérisées en ce qu'elles résultent d'un assemblage par coextrusion ou par coextrusion-doublage et en ce qu'elles contiennent trois couches constituées dans l'ordre de polymère du fluorure de vinyle ou de vinylidène, d'un mélange de polymère d'acétate de vinyle et de copolymère d'éthylène et d'acétate de vinyle et de polymère d'alpha-oléfine.

## Patentansprüche

1. Thermoplastische Strukturen mit mehrfachen Schichten umfassend eine oder mehrere Vinyl- oder Vinylidenfluorid-Polymer-Schichten, wobei jede entsprechend an eine alpha-Olefinpolymer-Schicht gebunden ist, dadurch gekennzeichnet, dass die Vinyl- oder Vinylidenfluorid-Polymer-Schicht an die alpha-Olefinpolymer-Schicht durch die verbindende Vermittlung eines Vinylacetatpolymers gebunden ist; das unter dem Homopolymer und den binären Copolymeren von Vinylacetat und Ethylen ausgewählt ist, enthaltend mindestens 50 Gew.-% Vinylacetat und ein binäres Copolymer von Ethylen und Vinylacetat enthaltend 60 bis 95 Gew.-% Ethylen.

2. Thermoplastische Strukturen mit mehrfachen Schichten nach Anspruch 1, dadurch gekennzeichnet, dass das Vinylacetatpolymer ein binäres Copolymer von Vinylacetat und Ethylen, enthaltend von 60 bis 90 Gew.-% Vinylacetat, ist.

3. Thermoplastische Strukturen mit mehrfachen Schichten nach einem der Ansprüche 1 und 2, dadurch gekennzeichnet, dass das Vinyl- oder Vinylidenfluorid-Polymer ein Vinylidenfluorid-Homopolymer ist.

4. Thermoplastische Strukturen mit mehrfachen Schichten nach einem der Ansprüche 1 und 2, dadurch gekennzeichnet, dass das Vinyl- oder Vinylidenfluorid-Polymer ein Vinylfluorid-Homopolymer ist.

5. Thermoplastische Strukturen mit mehrfachen Schichten nach einem der Ansprüche 1 und 2, dadurch gekennzeichnet, dass das alpha-Olefinpolymer ausgewählt ist unter Polyethylen, Polypropylen und Polystyrol.

6. Thermoplastische Strukturen mit mehrfachen Schichten nach Anspruch 5, dadurch gekennzeichnet, dass das alpha-Olefinpolymer Polyethylen ist.

7. Thermoplastische Strukturen mit mehrfachen Schichten nach einem der Ansprüche 1 bis 6, dadurch gekennzeichnet, dass das Vinylacetat-Polymer und das Copolymer von Ethylen und Vinylacetat zwei unterschiedliche Schichten bilden.

8. Thermoplastische Strukturen mit mehrfachen Schichten nach einem der Ansprüche 1 bis 7, dadurch gekennzeichnet, dass sie aus einer Zusammensetzung durch Kaschieren resultieren und, dass sie vier Schichten enthalten, die in der Reihenfolge Vinyl- oder Vinylidenfluorid-Polymer, Vinylacetat-Polymer, Ethylen- und Vinylacetat-Copolymer und alpha-Olefinpolymer gebildet sind.

9. Thermoplastische Strukturen mit mehrfachen Schichten nach einem der Ansprüche 1 bis 6, dadurch gekennzeichnet, dass das Vinylacetat-Polymer und das Ethylen- und Vinylacetat-Copolymer eine einzige Schicht bilden.

10. Thermoplastische Strukturen mit mehrfachen Schichten nach einem der Ansprüche 1 bis 6 und 9, dadurch gekennzeichnet, dass sie aus einer Zusammensetzung durch Coextrusion oder durch Kaschierungs-Coextrusion resultieren und, dass sie drei Schichten enthalten, die in der Reihenfolge Vinyl- oder Vinylidenfluorid-Polymer, einer Mischung von Vinylacetatpolymer und Ethylen- und Vinylacetat-Copolymer und alpha-Olefinpolymer gebildet sind.

## Claims

1. Multi-layered thermoplastic structures consisting of one or more vinyl or vinylidene fluoride polymer layers, each bonded respectively to an alpha-olefin polymer layer, characterized in that the vinyl or vinylidene fluoride polymer layer is bonded to the alpha-olefin polymer layer with the joint aid of a vinyl acetate polymer chosen from the hompolymer and the binary copolymers of vinyl acetate and ethylene containing at least 50% by weight of vinyl acetate and a binary copolymer of ethylene and vinyl acetate containing from 60 to 95% by weight of ethylene.

2. Multi-layered thermoplastic structures according to Claim 1, characterized in that the vinyl acetate polymer is a binary copolymer of vinyl acetate and ethylene containing from 60 to 90% by weight of vinyl acetate.

3. Multi-layered thermoplastic structures according to either of Claims 1 and 2, characterized in that the vinyl or vinylidene fluoride polymer is a homopolymer of vinylidene fluoride.

4. Multi-layered thermoplastic structures according to either of Claims 1 and 2, hcaracterized in that the vinyl or vinylidene fluoride polymer is a homopolymer of vinyl fluoride.

5. Multi-layered thermoplastic structures according to either of Claims 1 and 2, characterized in that the alpha-olefin polymer is chosen from polyethylene, polypropylene and polystyrene.

6. Multi-layered thermoplastic structures according to Claim 5, characterized in that the alpha-olefin polymer is polyethylene.

7. Multi-layered thermoplastic structures according to any one of Claims 1 to 6, characterized in that the vinyl acetate polymer and the copolymer of ehthylene and vinyl acetate constitute two distinct layers.

8. Multi-layered thermoplastic structures according to any one of Claims 1 to 7, characterized in that they result from an assembly by coating and in that they contain four layers consisting, in order, of a vinyl or vinylidene fluoride polymer, a vinyl acetate polymer, a copolymer of ethylene and vinyl acetate, and an alpha-olefin polymer.

9. Multi-layered thermoplastic structures according to any one of Claims 1 to 6, characterized in that the vinyl acetate polymer and the copolymer of ethylene and vinyl acetate constitute a single layer.

10. Multi-layered thermoplastic structures according to any one of Claims 1 to 6 and 9, characterized in that they result from an assembly by coextrusion or by coextrusion-coating and in that they contain three layers consisting, in order, of a vinyl or vinylidene fluoride polymer, a mixture of vinyl acetate polymer and a copolymer of ethylene and vinyl acetate, and an alpha-olefin polymer.